# EUROPEAN PATENT APPLICATION

(11) **EP 4 696 931 A1**
(43) Date of publication of application: **18.02.2026**
(21) Application number: 25196208.0
(22) Date of filing: 15.08.2025
(51) Int. Cl.: F23R 3/28

(54) **ENGINE FUEL NOZZLE WITH COAXIAL FUEL AND AIR FLOWS**

(30) Priority: 16.08.2024 US 202418807515
(71) Applicant: PRATT & WHITNEY CANADA CORP., Longueuil, Québec J4G 1A1 (CA)
(72) Inventor: LAO, Si-Man, (01BE5) Longueuil, J4G 1A1 (CA)
(74) Representative: Dehns

(57) **Abstract**

An apparatus is provided for an engine. This apparatus includes a fuel nozzle (72), and the fuel nozzle (72) includes a base end (78), a tip end (76), a center passage (84) and a plurality of fuel passages (88). The fuel nozzle (72) extends axially along an axis (74) from the base end (78) to the tip end (76). The center passage (84) extends axially through the fuel nozzle (72) from the base end (78) to the tip end (76). The center passage (84) projects uninterrupted radially out from the axis (74) to an outer peripheral boundary (98) of the center passage (84) along an entire axial extent of the center passage (84). The fuel passages (88) are arranged circumferentially around the axis (74). The fuel passages (88) respectively extend within the fuel nozzle (72) to a plurality of fuel passage outlets (118). Each of the fuel passage outlets (118) are disposed in a surface (100) at the outer peripheral boundary (98) of the center passage (84) axially between the base end (78) and the tip end (76).

## Description

### TECHNICAL FIELD

This disclosure relates generally to an engine and, more particularly, to a fuel nozzle for the engine.

### BACKGROUND INFORMATION

An engine such as a gas turbine engine may include multiple fuel injector nozzles for injecting fuel into a combustion chamber. Various types and configurations of fuel injector nozzles are known in the art. While these known fuel injector nozzles have various benefits, there is still room in the art for improvement.

### SUMMARY

According to an aspect of the present disclosure, an apparatus is provided for an engine. This apparatus includes a fuel nozzle, and the fuel nozzle includes a base end, a tip end, a center passage and a plurality of fuel passages. The fuel nozzle extends axially along an axis from the base end to the tip end. The center passage extends axially through the fuel nozzle from the base end to the tip end. The center passage projects uninterrupted radially out from the axis to an outer peripheral boundary of the center passage along an entire axial extent of the center passage. The fuel passages are arranged circumferentially around the axis. The fuel passages respectively extend within the fuel nozzle to a plurality of fuel passage outlets. Each of the fuel passage outlets are disposed in a surface at the outer peripheral boundary of the center passage axially between the base end and the tip end.

According to another aspect of the present disclosure, another apparatus is provided for an engine. This apparatus includes a fuel nozzle, and the fuel nozzle includes a base end, a tip end, a center passage and a plurality of fuel passages. The fuel nozzle extends axially along an axis from the base end to the tip end. The center passage extends axially within the fuel nozzle to a center passage outlet at the tip end. The center passage includes an axial convergent section, an axial divergent section and a throat located axially between the axial convergent section and the axial divergent section. The fuel passages are arranged circumferentially around the axis. The fuel passages include a first fuel passage and a second fuel passage. The first fuel passage extends within the fuel nozzle to a first fuel passage outlet. The first fuel passage outlet is disposed along and fluidly coupled to the axial divergent section axially between the axial convergent section and the center passage outlet. A trajectory of the first fuel passage at the first fuel passage outlet is angularly offset from the axis by an offset angle equal to or less than forty-five degrees. The second fuel passage extends within the fuel nozzle to a second fuel passage outlet. The second fuel passage outlet is disposed along and fluidly coupled to the axial divergent section axially between the axial convergent section and the center passage outlet.

According to still another aspect of the present disclosure, another apparatus is provided for an engine. This apparatus includes a fuel nozzle, and the fuel nozzle includes a base end, a tip end, a center passage and a plurality of fuel passages. The fuel nozzle extends axially along an axis from the base end to the tip end. The center passage extends axially through the fuel nozzle from a center passage inlet at the base end to a center passage outlet at the tip end. The center passage projects radially out from the axis to an outer peripheral boundary of the center passage. The fuel passages are arranged circumferentially around the axis. The fuel passages include a first fuel passage and a second fuel passage. The first fuel passage extends within the fuel nozzle to a first fuel passage outlet. The first fuel passage outlet is disposed along an axial section of the center passage where the outer peripheral boundary has a curved sectional geometry when viewed in a reference plane parallel with the axis. A trajectory of the first fuel passage at the first fuel passage outlet is angularly offset from the axis by an offset angle equal to or less than forty-five degrees. The second fuel passage extends within the fuel nozzle to a second fuel passage outlet. The second fuel passage outlet is disposed along the axial section of the center passage.

The following optional features may be applied to any of the above aspects.

The center passage may have a center passage inlet at the base end and a center passage outlet at the tip end. The fuel nozzle may be configured to direct air through the center passage from the center passage inlet to the center passage outlet without swirling around the axis.

The fuel nozzle may be configured without an air swirler in the center passage at least upstream of the fuel passage outlets.

The center passage may have a center passage inlet at the base end and a center passage outlet at the tip end. A first axial section of the center passage may converge radially inwards towards the axis as the first axial section extends axially towards the center passage outlet.

A second axial section of the center passage may diverge radially outwards away from the axis as the second axial section extends axially towards the center passage outlet.

Each of the fuel passage outlets may be disposed in the surface along the second axial section of the center passage.

The center passage may have a center passage inlet at the base end and a center passage outlet at the tip end. An axial section of the center passage may diverge radially outwards away from the axis as the axial section extends axially towards the center passage outlet.

Each of the fuel passage outlets may be disposed in the surface along the axial section of the center passage.

The center passage may be configured as or otherwise include a convergent-divergent passage with a throat located axially between an axial convergent section and an axial divergent section. Each of the fuel passage outlets may be disposed along the center passage axially between the throat and the tip end.

The fuel passages may be a first fuel passage. The fuel passage outlets may include a first fuel passage outlet for the first fuel passage. A trajectory of the first fuel passage at the first fuel passage outlet may be angularly offset from the axis by an offset angle equal to or less than forty-five degrees.

The offset angle may be equal to or less than thirty degrees.

The fuel nozzle may also include a fuel plenum extending within the fuel nozzle circumferentially about the axis. The fuel passages may respectively extend within the fuel nozzle from the fuel plenum to the fuel passage outlets.

The fuel plenum may be disposed radially outboard of and may axially overlap the center passage.

The center passage may have a center passage outlet at the tip end. The fuel nozzle may be configured to direct a non-annular inner airflow and an outer fuel flow axially out of the center passage through the center passage outlet with the outer fuel flow radially bordering the non-annular inner airflow.

The fuel nozzle may include one or more air passages. The fuel nozzle may also be configured to direct a second airflow out of the one or more air passages to impinge against the annular fuel flow outside of the fuel nozzle.

The apparatus may also include a fuel system configured to deliver gaseous fuel to the fuel passages.

The apparatus may also include a fuel system configured to deliver fuel to the fuel passages. The fuel may be hydrogen (H₂) fuel.

The apparatus may also include a compressor section, a combustor section, a turbine section and a flowpath. The combustor section may include the fuel nozzle. The flowpath may extend through the compressor section, the combustor section and the turbine section from an inlet into the flowpath to an exhaust from the flowpath.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial schematic sectional illustration of an aircraft propulsion system.
FIG. 2 is a partial schematic illustration of the aircraft propulsion system at a combustor section.
FIG. 3 is a partial schematic sectional illustration of a fuel injector nozzle at an interface with a combustor wall.
FIG. 4 is an end view illustration of the fuel injector nozzle.
FIG. 5 is a partial schematic sectional illustration of the fuel injector nozzle of FIG. 3 configured with additional air passages.
FIGS. 6A-D are schematic illustrations of various nozzle center passage geometries.

### DETAILED DESCRIPTION

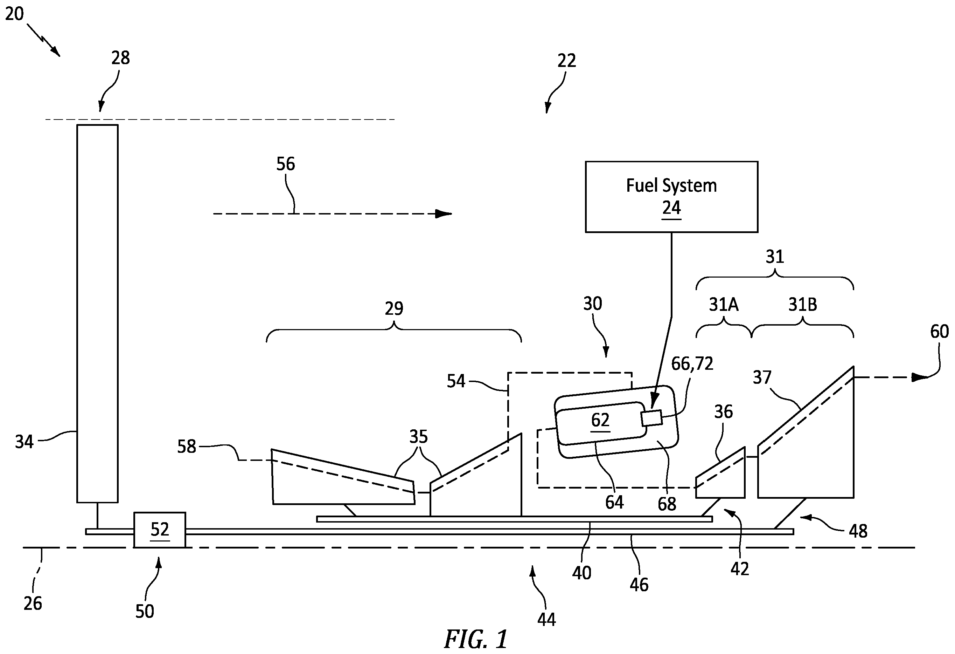

FIG. 1 illustrates a propulsion system 20 for an aircraft with a gas turbine engine 22 and a fuel system 24. The aircraft may be an airplane, a rotorcraft (e.g., a helicopter), a drone (e.g., an unmanned aerial vehicle (UAV)), or any other manned or unmanned aerial vehicle or system. For ease of description, the aircraft propulsion system 20 is described below as a turbofan propulsion system, and the turbine engine 22 is described below as a turbofan engine. The present disclosure, however, is not limited to such an exemplary aircraft propulsion system nor to such an exemplary turbine engine. The aircraft propulsion system 20, for example, may alternatively be configured as a turbojet propulsion system, a turboprop propulsion system, a turboshaft propulsion system or an open rotor propulsion system. Moreover, the present disclosure is not limited to propulsion system applications. The turbine engine 22, for example, may alternatively be configured as or included as part of an auxiliary power unit (APU) for the aircraft, a ground-based (e.g., industrial) electrical power system or a marine-based electrical power system.

The turbine engine 22 of FIG. 1 extends axially along an engine axis 26 between a forward, upstream end of the turbine engine 22 and an aft, downstream end of the turbine engine 22. Briefly, the engine axis 26 may be a centerline axis of the turbine engine 22 and/or one or more of its members. The engine axis 26 may also or alternatively be a rotational axis for one or more members of the turbine engine 22. The turbine engine 22 of FIG. 1 includes a propulsor section 28 (e.g., a fan section), a compressor section 29, a combustor section 30 and a turbine section 31. The turbine section 31 of FIG. 1 includes a high pressure turbine (HPT) section 31A and a low pressure turbine (LPT) section 31B, which LPT section 31B may be a power turbine (PT) section dedicated to powering operation of the propulsor section 28.

The engine sections 28-31B may be arranged sequentially along the engine axis 26. The propulsor section 28 includes a bladed propulsor rotor 34; e.g., a fan rotor. The compressor section 29 includes a bladed compressor rotor 35. The HPT section 31A includes a bladed high pressure turbine (HPT) rotor 36. The LPT section 31B includes a bladed low pressure turbine (LPT) rotor 37, which LPT rotor 37 may be a power turbine (PT) rotor. The propulsor rotor 34, the compressor rotor 35, the HPT rotor 36 and the LPT rotor 37 each respectively include one or more arrays (e.g., stages) of rotor blades, where the rotor blades in each array are arranged circumferentially around and are connected to a respective rotor disk or hub. The rotor blades in each array, for example, may be formed integral with or mechanically fastened, welded, brazed and/or otherwise attached to the respective rotor disk and/or hub.

The compressor rotor 35 is coupled to and rotatable with the HPT rotor 36. The compressor rotor 35 of FIG. 1, for example, is connected to the HPT rotor 36 by a high speed shaft 40. At least (or only) the compressor rotor 35, the HPT rotor 36 and the high speed shaft 40 collectively form a high speed rotating assembly 42; e.g., a high speed spool of a core 44 of the turbine engine 22. Briefly, the engine core 44 of FIG. 1 includes the compressor section 29, the combustor section 30 and the turbine section 31.

The LPT rotor 37 of FIG. 1 is connected to a low speed shaft 46. At least (or only) the LPT rotor 37 and the low speed shaft 46 collectively form a low speed rotating assembly 48; e.g., a low speed spool of the engine core 44. This low speed rotating assembly 48 is further coupled to the propulsor rotor 34 through a drivetrain 50. This drivetrain 50 may be configured as a geared drivetrain, where a geartrain 52 (e.g., a transmission, a speed change device, an epicyclic geartrain, etc.) is disposed between and operatively couples the propulsor rotor 34 to the low speed rotating assembly 48 and its LPT rotor 37. With this arrangement, the propulsor rotor 34 may rotate at a different (e.g., slower) rotational velocity than the low speed rotating assembly 48 and its LPT rotor 37. However, the drivetrain 50 may alternatively be configured as a direct drive drivetrain, where the geartrain 52 is omitted. With such an arrangement, the propulsor rotor 34 rotates at a common (the same) rotational velocity as the low speed rotating assembly 48 and its LPT rotor 37. Referring again to FIG. 1, each of the rotating assemblies 42, 48 and its members as well as the propulsor rotor 34 may be rotatable about the engine axis 26. The present disclosure, however, is not limited to such an exemplary engine arrangement.

The turbine engine 22 of FIG. 1 includes a (e.g., annular) core flowpath 54 and a (e.g., annular) bypass flowpath 56. Here, the bypass flowpath 56 is a ducted flowpath within the aircraft propulsion system 20 and its turbine engine 22. The bypass flowpath 56, however, may alternatively be an open flowpath where the propulsor rotor 34 is alternatively configured as an un-ducted propulsor rotor; e.g., a propeller rotor, a rotorcraft rotor, an open rotor, etc. Referring again to FIG. 1, the core flowpath 54 extends within the turbine engine 22 and its engine core 44 from an airflow inlet 58 into the core flowpath 54 to a combustion products exhaust 60 from the core flowpath 54. More particularly, the core flowpath 54 extends from the core inlet 58, sequentially through the compressor section 29, the combustor section 30, the HPT section 31A and the LPT section 31B, to the core exhaust 60. The bypass flowpath 56 of FIG. 1 extends outside of the engine core 44 thereby bypassing the engine core 44 and its engine sections 29-31B.

During operation of the turbine engine 22 of FIG. 1, air is directed across the propulsor rotor 34 and into the engine core 44 through the core inlet 58. This air entering the core flowpath 54 may be referred to as core air. The core air is compressed by the compressor rotor 35 and directed into a combustion chamber 62 (e.g., an annular combustion chamber) within a combustor 64 (e.g., an annular combustor) of the combustor section 30. Fuel is injected into the combustion chamber 62 by one or more fuel injectors 66 and mixed with the compressed core air to provide a fuel-air mixture. This fuel-air mixture is ignited and combustion products thereof flow through and sequentially drive rotation of the HPT rotor 36 and the LPT rotor 37. The rotation of the HPT rotor 36 drives rotation of the compressor rotor 35 and, thus, the compression of the air received from the core inlet 58. The rotation of the LPT rotor 37 drives rotation of the propulsor rotor 34. The rotation of the propulsor rotor 34 of FIG. 1 propels some of the air flow thereacross (e.g., the air not entering the engine core 44) through the bypass flowpath 56 to provide engine thrust.

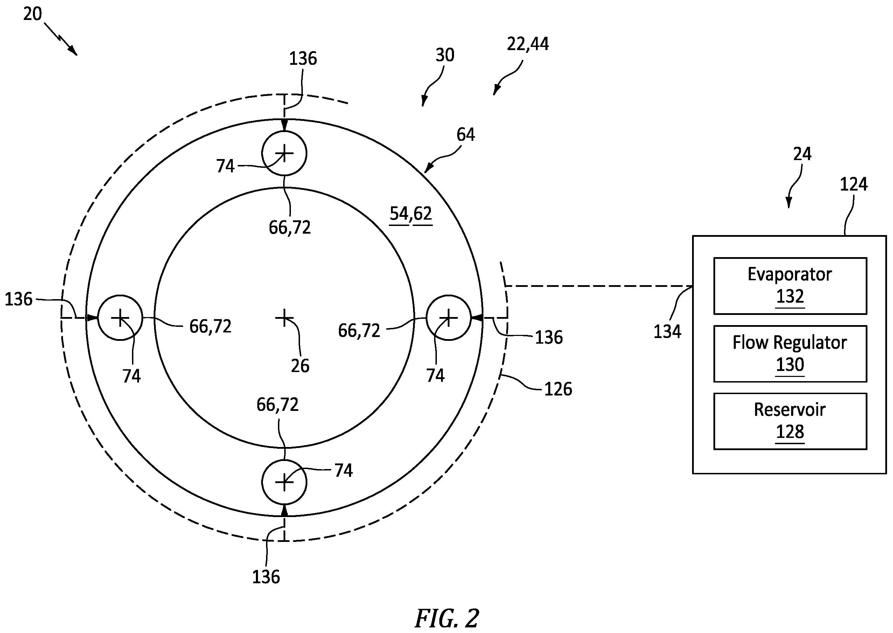

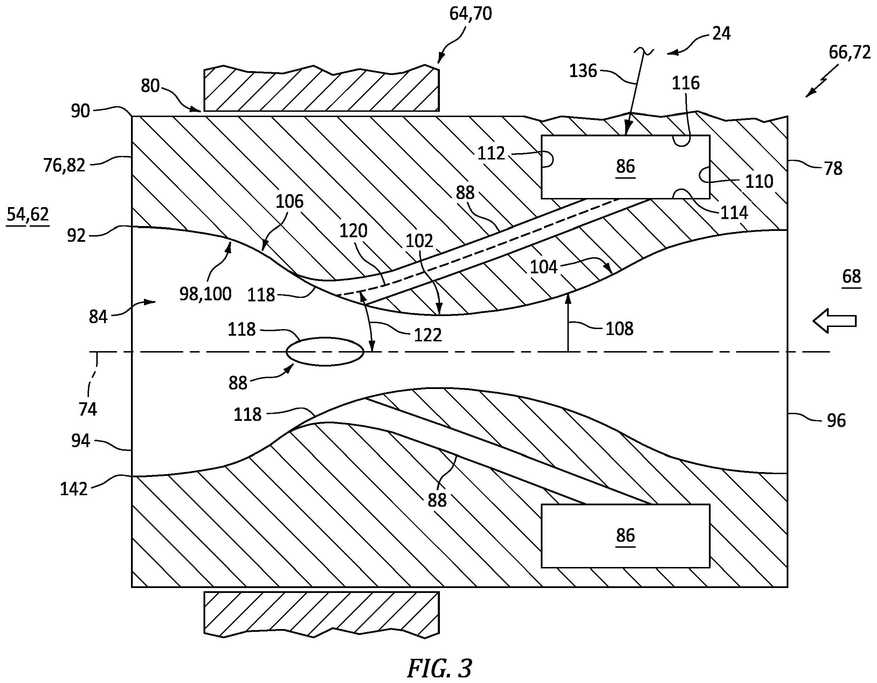

Referring to FIG. 2, the fuel injectors 66 are arranged and may be equispaced circumferentially about the engine axis 26 in an annular array; e.g., a circular array. Referring to FIG. 3, each of the fuel injectors 66 may extend across a diffuser plenum 68 surrounding the combustor 64 to a wall 70 of the combustor 64. Briefly, the combustor wall 70 may be a sidewall of the combustor 64 or a bulkhead wall of the combustor 64 depending on the specific combustor configuration and/or fuel injector placement. Each of the fuel injectors 66 includes a fuel nozzle 72 mated with the combustor wall 70. The fuel nozzle 72 of FIG. 3, for example, projects axially along a nozzle axis 74 through (or partially into) a port 80 in the combustor wall 70 to a distal tip end 76 (e.g., a tip, a face, etc.) of the fuel nozzle 72, which nozzle axis 74 may be a centerline axis of the fuel nozzle 72. The nozzle tip end 76 is thereby located within (or adjacent) the combustion chamber 62. More generally, the fuel nozzle 72 extends axially along the nozzle axis 74 from a base end 78 of the fuel nozzle 72 to the nozzle tip end 76. The fuel nozzle 72 of FIG. 3 includes a face surface 82, a center passage 84, a fuel plenum 86 and one or more fuel passages 88; e.g., gaseous fuel passages.

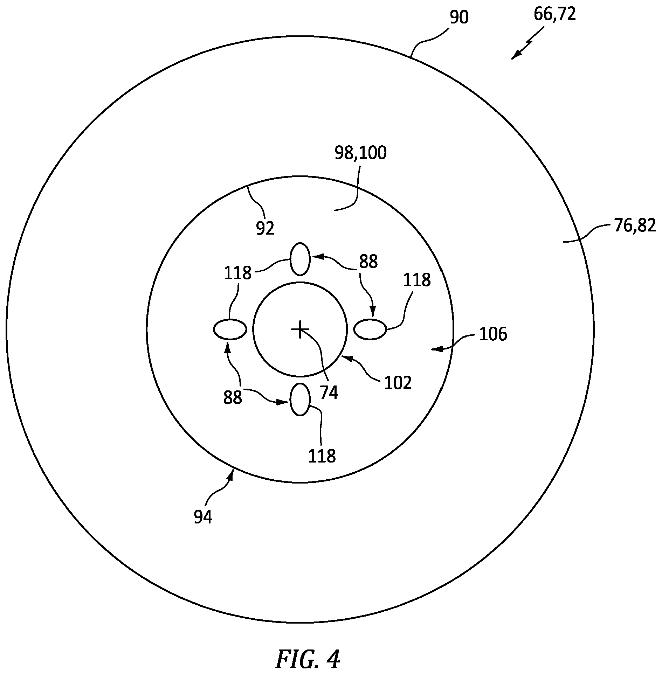

The nozzle face surface 82 is located at (e.g., on, adjacent or proximate) the nozzle tip end 76. The nozzle face surface 82 of FIG. 3, for example, partially or completely defines the nozzle tip end 76. The nozzle face surface 82 extends radially inward towards the nozzle axis 74 from a (e.g., circular) radial outer edge 90 of the nozzle face surface 82 to a (e.g., circular) radial inner edge 92 of the nozzle face surface 82. Referring to FIG. 4, the nozzle face surface 82 extends circumferentially about (e.g., completely around) the nozzle axis 74. The nozzle face surface 82 may thereby have a full-hoop (e.g., annular) geometry that circumscribes an air-fuel outlet 94 from the nozzle center passage 84. The face surface inner edge 92 of FIG. 4, for example, forms an outer peripheral boundary of the center passage outlet 94 at the nozzle tip end 76. Referring to FIG. 3, the nozzle face surface 82 may be a flat, planar surface. The nozzle face surface 82 may be configured without any radial and/or circumferential interruptions. The nozzle face surface 82 of FIG. 3 is angularly offset from the nozzle axis 74 by an offset angle when viewed, for example, in a reference plane parallel to (e.g., including) the nozzle axis 74; e.g., a plane of FIG. 3. This nozzle face surface offset angle of FIG. 3 is a right angle - a ninety degree (90°) angle. The present disclosure, however, is not limited to such an exemplary nozzle face surface configuration. For example, for certain combustor environments, the nozzle face surface 82 may alternatively be convex, concave and/or otherwise contoured; e.g., frustoconical, etc.

The nozzle center passage 84 of FIG. 3 extends axially through the fuel nozzle 72 from an airflow inlet 96 into the nozzle center passage 84 to the center passage outlet 94. The center passage inlet 96 is disposed at the nozzle base end 78. The center passage outlet 94 is disposed at the nozzle tip end 76. The nozzle center passage 84 may be configured as a bore in the fuel nozzle 72 coaxial with the nozzle axis 74. The nozzle center passage 84 of FIG. 3, for example, projects radially out from the nozzle axis 74 to a radial outer peripheral boundary 98 of the nozzle center passage 84. This center passage outer peripheral boundary 98 may be formed by a radial inner surface 100 of the fuel nozzle 72 with a smooth, non-straight (e.g., splined, curved, tortuous, etc.) sectional geometry when viewed, for example, in the reference plane. The nozzle inner surface 100 may extend axially from the nozzle base end 78 to the nozzle tip end 76. Alternatively, it is contemplated the center passage outer peripheral boundary 98 may be formed by multiple radial inner surfaces of the fuel nozzle 72, where the nozzle inner surfaces are arranged end-to-end along the nozzle axis 74 between the nozzle base end 78 and the nozzle tip end 76.

The nozzle center passage 84 may be configured as a convergent-divergent passage. The nozzle center passage 84 of FIG. 3, for example, includes a throat 102, an axial upstream convergent section 104 and an axial downstream divergent section 106.

The throat 102 is disposed axially along the nozzle axis 74 between the convergent section 104 and the divergent section 106. The throat 102 of FIG. 3, for example, may be formed by an axial interface between the convergent section 104 and the divergent section 106. The throat 102 of FIG. 3, in particular, is formed by a radial apex in a curvature of the center passage outer peripheral boundary 98 and the nozzle inner surface 100 of FIG. 3 when viewed, for example, in the reference plane. The throat 102 may thereby form a pinch point and/or a restriction axially along the nozzle center passage 84 between the convergent section 104 and the divergent section 106.

The convergent section 104 extends axially along the nozzle axis 74 in a downstream direction from or about the center passage inlet 96 to the throat 102, where the downstream direction may be relative to flow through the nozzle center passage 84 from the diffuser plenum 68 to the combustion chamber 62. A radial distance 108 from the nozzle axis 74 to the center passage outer peripheral boundary 98 and the nozzle inner surface 100 of FIG. 3 (e.g., continuously) decreases as the convergent section 104 extends axially in the downstream direction to the throat 102. The convergent section 104 of the nozzle center passage 84 thereby converges radially inwards towards the nozzle axis 74 as the convergent section 104 extends axially in the downstream direction to the throat 102. A slope of the curvature of the center passage outer peripheral boundary 98 and the nozzle inner surface 100 of FIG. 3 along the convergent section 104 may increase and then decrease as the convergent section 104 extends axially from the center passage inlet 96 to the throat 102. Herein, the term "slope" may describe a radial rise to an axial run.

The divergent section 106 extends axially along the nozzle axis 74 in the downstream direction from the throat 102 to or about the center passage outlet 94. The radial distance 108 from the nozzle axis 74 to the center passage outer peripheral boundary 98 and the nozzle inner surface 100 of FIG. 3 (e.g., continuously) increases as the divergent section 106 extends axially in the downstream direction away from the throat 102. The divergent section 106 of the nozzle center passage 84 thereby diverges radially outwards away from the nozzle axis 74 as the divergent section 106 extends axially in the downstream direction away from the throat 102. The slope of the curvature of the center passage outer peripheral boundary 98 and the nozzle inner surface 100 of FIG. 3 along the divergent section 106 may increase and then decrease as the divergent section 106 extends axially from the throat 102 to the center passage outlet 94.

The nozzle center passage 84 may be uninterrupted along an (e.g., entire) axial extent of the nozzle center passage 84 within the fuel nozzle 72; e.g., from the nozzle base end 78 to the nozzle tip end 76. The nozzle center passage 84 and its center passage sections 102, 104 and 106 of FIG. 3, for example, may project radially uninterrupted out from the nozzle axis 74 to the center passage outer peripheral boundary 98. The nozzle center passage 84 and its center passage sections 102, 104 and 106 of FIG. 3 may also extend circumferentially uninterrupted around the nozzle axis 74. The fuel nozzle 72 may thereby be configured without any flow impediments, flow controls, flow influencing devices such as, but not limited to, an air swirler within the nozzle center passage 84. The nozzle center passage 84 may also not be (e.g., directly) fluidly coupled to another volume with an air swirler, at least at the center passage inlet 96. The fuel nozzle 72 may thereby be configured to direct a flow of fluid through the nozzle center passage 84 from the center passage inlet 96 to the center passage outlet 94 (e.g., substantially or completely) without swirling that flow of fluid around the nozzle axis 74.

The nozzle fuel plenum 86 is configured as an internal chamber such as a fuel gallery within the fuel nozzle 72. The nozzle fuel plenum 86 of FIG. 3, for example, is spaced radially outboard of and may axially overlap the nozzle center passage 84 and its convergent section 104. This nozzle fuel plenum 86 extends axially along the nozzle axis 74 within the fuel nozzle 72 between opposing axial sides 110 and 112 of the nozzle fuel plenum 86. The nozzle fuel plenum 86 extends radially within the fuel nozzle 72 between opposing radial sides 114 and 116 of the nozzle fuel plenum 86. The nozzle fuel plenum 86 extends circumferentially about (e.g., partially or completely around) the nozzle axis 74 within the fuel nozzle 72. The nozzle fuel plenum 86 of FIG. 3 thereby partially or completely circumscribes the nozzle center passage 84 and its convergent section 104.

Referring to FIG. 4, the nozzle fuel passages 88 and their respective fuel passage outlets 118 are arranged and may be equispaced circumferentially around the nozzle axis 74 in an annular array; e.g., a circular array. Referring to FIG. 3, each nozzle fuel passage 88 extends longitudinally within the fuel nozzle 72 from the nozzle fuel plenum 86 to its respective fuel passage outlet 118. Each fuel passage outlet 118 is disposed along and is fluidly coupled to the nozzle center passage 84 at a location downstream of the convergent section 104 and, more particularly, downstream of the throat 102. Each fuel passage outlet 118 of FIG. 3, for example, is formed by and disposed in (e.g., pierces) the center passage outer peripheral boundary 98 and the nozzle inner surface 100 of FIG. 3 along the divergent section 106. Here, each fuel passage outlet 118 is spaced (e.g., slightly) axially downstream of the throat 102. However, each fuel passage outlet 118 of FIG. 3 is arranged axially closer to the throat 102 than the center passage outlet 94. With the foregoing arrangement, each nozzle fuel passage 88 fluidly couples the nozzle fuel plenum 86 to the nozzle center passage 84 and its divergent section 106.

Each nozzle fuel passage 88 and its longitudinal centerline follows a trajectory 120. This fuel passage trajectory 120 points axially along the nozzle axis 74 towards the nozzle tip end 76 / the center passage outlet 94. The fuel passage trajectory 120 may also point radially inwards towards the nozzle axis 74. The fuel passage trajectory 120 of FIG. 3, for example, is angularly offset from the nozzle axis 74 by an offset angle 122, at least at the respective fuel passage outlet 118. The fuel passage offset angle 122 may be a non-zero acute angle equal to or less than forty-five degrees (45°); e.g., equal to or less than thirty degrees (30°), twenty degrees (20°), or even ten degrees (10°). It is contemplated, however, the fuel passage trajectory 120 may alternatively be arranged parallel to the nozzle axis 74. Referring again to FIG. 3, the fuel passage centerline of each nozzle fuel passage 88 may lie in a respective plane that includes the nozzle axis 74, at least at the respective fuel passage outlet 118. Thus, while the fuel passage trajectory 120 of FIG. 3 includes an axial component and an optional radial component, the fuel passage trajectory 120 may not include a circumferential component. The fuel nozzle 72 may thereby be configured to direct the fuel into the nozzle center passage 84 through the nozzle fuel passages 88 (e.g., substantially or completely) without swirling that fuel of fluid around the nozzle axis 74.

Referring to FIG. 2, the fuel injected into the combustion chamber 62 by the fuel nozzles 72 may be a gaseous fuel. The fuel system 24 is configured to deliver this gaseous fuel to the fuel injectors 66 and their fuel nozzles 72 for the subsequent injection into the combustion chamber 62. For ease of description, the gaseous fuel is described below as a gaseous hydrogen fuel; e.g., hydrogen (H₂) gas. The gaseous fuel, however, may alternatively be another gaseous fuel such as, but not limited to, gaseous methane (e.g., natural gas), propane gas or the like. Although, it is contemplated select liquid fuels may alternatively be delivered to the fuel injectors 66 and their fuel nozzles 72 for injection into the combustion chamber 62. Referring again to FIG. 2, the fuel system 24 includes a (e.g., gaseous) fuel source 124 and a (e.g., gaseous) fuel manifold 126.

The fuel source 124 of FIG. 2 includes a fuel reservoir 128, a fuel flow regulator 130 and a fuel evaporator 132. The fuel reservoir 128 is configured to store a quantity of fuel (e.g., in its liquid phase) before, during and/or after aircraft powerplant operation. The fuel reservoir 128, for example, may be configured as or otherwise include a tank, a cylinder, a pressure vessel, a bladder or any other type of (e.g., insulated) fuel storage container. The fuel flow regulator 130 is configured to direct a flow of the fuel (e.g., in its liquid phase) from the fuel reservoir 128 to the fuel evaporator 132. The fuel flow regulator 130, for example, may be configured as or otherwise include a fuel compressor, a fuel pump and/or a fuel valve (or valve system). The fuel evaporator 132 is configured to facilitate evaporation of the fuel from its liquid phase to a gaseous phase so as to output the gaseous fuel from an outlet 134 of the fuel source 124. This fuel source outlet 134 may be fluidly coupled to each of the fuel injectors 66 and their fuel nozzles 72 sequentially through the fuel manifold 126 and a respective (e.g., gaseous) fuel feed passage 136. Referring to FIG. 3, each fuel feed passage 136 may be fluidly coupled, in parallel, to the nozzle fuel passages 88 of a respective one of the fuel nozzles 72 through the respective nozzle fuel plenum 86.

During turbine engine operation, each fuel nozzle 72 receives compressed core air from the diffuser plenum 68. This compressed core air enters the fuel nozzle 72 and its nozzle center passage 84 through the center passage inlet 96. The fuel nozzle 72 directs the compressed core air axially through the nozzle center passage 84 to the center passage outlet 94, where the compressed core air is first accelerated within the convergent section 104. The fuel nozzle 72 subsequently injects the compressed core air into the combustion chamber 62 through the center passage outlet 94 as an axially extending (e.g., non-annular) inner airflow. Simultaneously, the fuel nozzle 72 receives the gaseous fuel from the fuel system 24 (see also FIG. 2). This gaseous fuel is (e.g., equally) distributed by the nozzle fuel plenum 86 to the nozzle fuel passages 88. The fuel nozzle 72 directs the gaseous fuel through each of the nozzle fuel passages 88 to the respective fuel passage outlet 118. The fuel nozzle 72 directs the gaseous fuel into nozzle center passage 84 through the fuel passage outlets 118 about an outer periphery of the compressed core air, for example in such a manner that little or no mixing occurs within the nozzle center passage 84 and its divergent section 106 between the gaseous fuel and the compressed core air. Note, a flow straightener may also be used to further reduce mixing caused by turbulent air entering airflow inlet 96, for example. The fuel nozzle 72 subsequently injects the gaseous fuel into the combustion chamber 62 through the center passage outlet 94 as an axially extending (e.g., annular) outer fuel flow. This fuel flow is radially outboard of and boarders the airflow, and the fuel flow may circumscribe the airflow at least as the fuel and the compressed core air is initially injected into the combustion chamber 62. Briefly, individual flows of the gaseous fuel directed into the nozzle center passage 84 from the nozzle fuel passages 88 may flow together (inside or outside of the nozzle center passage 84) to provide the fuel flow with an annular geometry circumscribing the airflow. Alternatively, the individual flows of the gaseous fuel may be slightly circumferentially spaced from one another such that the outer fuel flow includes an array of fuel streams circumscribing the airflow. The foregoing fuel-air flow arrangements may facilitate deeper penetration of the gaseous fuel and the compressed core air prior to mixing and combustion, which may reduce or prevent flashback and/or flame holding.

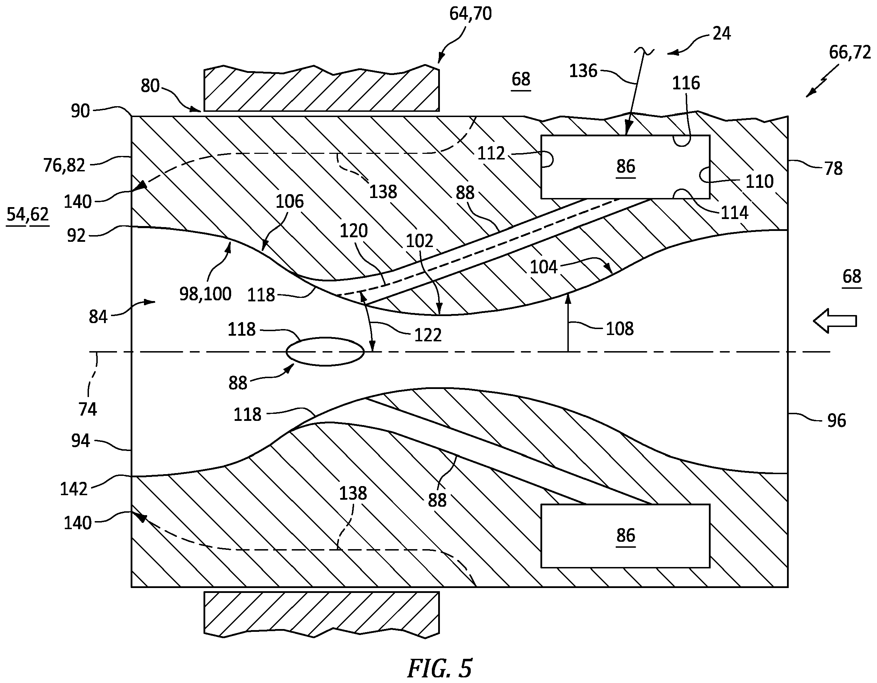

In some embodiments, referring to FIG. 5, each fuel nozzle 72 may also include one or more outer air passages 138. These outer air passages 138 are arranged and may be equispaced circumferentially around the nozzle axis 74 in an annular array; e.g., a circular array. The outer air passages 138 of FIG. 5 are disposed radially outboard of the nozzle center passage 84 as well as the nozzle fuel passages 88. The outer air passages 138 may also be fluidly discrete from the nozzle center passage 84. Each outer air passage 138 of FIG. 5, for example, extends longitudinally within the fuel nozzle 72 to an airflow outlet 140 from the respective outer air passage 138, which air passage outlet 140 may be disposed at the nozzle tip end 76; e.g., in the nozzle face surface 82 radially outboard of the center passage outlet 94. With this arrangement, the fuel nozzle 72 may direct additional compressed core air received from the diffuser plenum 68 through the outer air passages 138 and into the combustion chamber 62. This additional compressed core air may be directed into the combustion chamber 62 to impinge against the fuel flow outside of the fuel nozzle 72 so as to facilitate mixing between the fuel flow and the airflow within the combustion chamber 62, axially spaced away from the fuel nozzle 72 and its nozzle tip end 76.

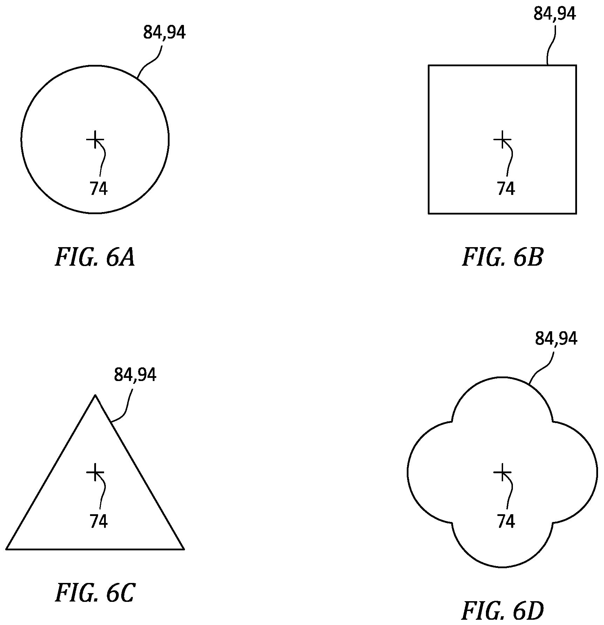

In some embodiments, referring to FIG. 6A, the nozzle center passage 84 and its center passage outlet 94 may be configured with a circular cross-sectional geometry. In other embodiments, referring FIGS. 6B-D, the nozzle center passage 84 and its center passage outlet 94 may be configured with a non-circular cross-sectional geometry. For example, referring to FIG. 6B, the nozzle center passage 84 and its center passage outlet 94 may be configured with a square cross-sectional geometry. In another example, referring to FIG. 6C, the nozzle center passage 84 and its center passage outlet 94 may be configured with a triangular cross-sectional geometry. In still another example, referring to FIG. 6D, the nozzle center passage 84 and its center passage outlet 94 may be configured with a lobed (e.g., daisy-shaped, clover-shaped, etc.) cross-sectional geometry.

In some embodiments, referring to FIG. 3, the fuel nozzle 72 may be configured with one or more mixing features at its nozzle tip end 76 / the center passage outlet 94. These mixing features are configured to facilitate mixing of the fuel flow and the airflow outside of the fuel nozzle 72 within the combustion chamber 62. Examples of the mixing features include, but are not limited to;
▪ a sharp edge 142 between (a) the center passage outer peripheral boundary 98 and the nozzle inner surface 100 of FIG. 3 and (b) the nozzle face surface 82;
▪ one or more trip strips;
▪ etc.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An apparatus for an engine, comprising:
a fuel nozzle (72) including a base end (78), a tip end (76), a center passage (84) and a plurality of fuel passages (88), the fuel nozzle (72) extending axially along an axis (74) from the base end (78) to the tip end (76);
the center passage (84) extending axially through the fuel nozzle (72) from the base end (78) to the tip end (76), and the center passage (84) projecting uninterrupted radially out from the axis (74) to an outer peripheral boundary (98) of the center passage (84) along an entire axial extent of the center passage (84); and
the plurality of fuel passages (88) arranged circumferentially around the axis (74), the plurality of fuel passages (88) respectively extending within the fuel nozzle (72) to a plurality of fuel passage outlets (118), and each of the plurality of fuel passage outlets (118) disposed in a surface (100) at the outer peripheral boundary (98) of the center passage (84) axially between the base end (78) and the tip end (76).

2. The apparatus of claim 1, wherein:
the center passage (84) has a center passage inlet (96) at the base end (78) and a center passage outlet (94) at the tip end (76); and
the fuel nozzle (72) is configured to direct air through the center passage (84) from the center passage inlet (96) to the center passage outlet (94) without swirling around the axis (74).

3. The apparatus of claim 1 or 2, wherein the fuel nozzle (72) is configured without an air swirler in the center passage (84) at least upstream of the plurality of fuel passage outlets (118).

4. The apparatus of claim 1, 2 or 3, wherein:
the center passage (84) has a center passage inlet (96) at the base end (78) and a center passage outlet (94) at the tip end (76); and
a first axial section (104) of the center passage (84) converges radially inwards towards the axis as the first axial section (104) extends axially towards the center passage outlet (94).

5. The apparatus of claim 4, wherein a second axial section (106) of the center passage (84) diverges radially outwards away from the axis (74) as the second axial section (106) extends axially towards the center passage outlet (94),
wherein, optionally, each of the plurality of fuel passage outlets (118) is disposed in the surface (100) along the second axial section (106) of the center passage (84).

6. The apparatus of any of claims 1 to 4, wherein:
the center passage (84) has a center passage inlet (96) at the base end (78) and a center passage outlet (94) at the tip end (76); and
an axial section (106) of the center passage (84) diverges radially outwards away from the axis (74) as the axial section (106) extends axially towards the center passage outlet (94),
wherein, optionally, each of the plurality of fuel passage outlets (118) is disposed in the surface (100) along the axial section (106) of the center passage (84).

7. The apparatus of any of claims 1 to 4, wherein:
the center passage (84) comprises a convergent-divergent passage with a throat (102) located axially between an axial convergent section (104) and an axial divergent section (106); and
each of the plurality of fuel passage outlets (118) is disposed along the center passage (84) axially between the throat (102) and the tip end (76).

8. The apparatus of any preceding claim, wherein:
the plurality of fuel passages (88) comprises a first fuel passage, and the plurality of fuel passage outlets (118) comprises a first fuel passage outlet (118) for the first fuel passage; and
a trajectory (120) of the first fuel passage at the first fuel passage outlet (118) is angularly offset from the axis (74) by an offset angle (122) equal to or less than forty-five degrees,
wherein, optionally, the offset angle (122) is equal to or less than thirty degrees.

9. The apparatus of any preceding claim, wherein:
the fuel nozzle (72) further includes a fuel plenum (86) extending within the fuel nozzle (72) circumferentially about the axis (76); and
the plurality of fuel passages (88) respectively extend within the fuel nozzle (72) from the fuel plenum (86) to the plurality of fuel passage outlets (118),
wherein, optionally, the fuel plenum (86) is disposed radially outboard of and axially overlaps the center passage (84).

10. The apparatus of any preceding claim, wherein:
the center passage (84) has a center passage outlet (94) at the tip end (76); and
the fuel nozzle (72) is configured to direct a non-annular inner airflow and an outer fuel flow axially out of the center passage (84) through the center passage outlet (94) with the outer fuel flow radially bordering the non-annular inner airflow.

11. The apparatus of claim 10, wherein:
the fuel nozzle (72) further comprises one or more air passages (138); and
the fuel nozzle (72) is further configured to direct a second airflow out of the one or more air passages (138) to impinge against the annular fuel flow outside of the fuel nozzle (72).

12. The apparatus of any preceding claim, further comprising:
a fuel system (24) configured to deliver gaseous fuel to the plurality of fuel passages (88); or
a fuel system (24) configured to deliver fuel to the plurality of fuel passages (88), and the fuel comprising hydrogen (H₂) fuel.

13. The apparatus of any preceding claim, further comprising:
a compressor section (29);
a combustor section (30) comprising the fuel nozzle (72);
a turbine section (31); and
a flowpath (54) extending through the compressor section (29), the combustor section (30) and the turbine section (31) from an inlet (58) into the flowpath (54) to an exhaust (60) from the flowpath (54).

14. An apparatus for an engine, comprising:
a fuel nozzle (72) including a base end (78), a tip end (76), a center passage (84) and a plurality of fuel passages (88), the fuel nozzle (72) extending axially along an axis (74) from the base end (78) to the tip end (76);
the center passage (84) extending axially within the fuel nozzle (72) to a center passage outlet (94) at the tip end (76), the center passage (84) including an axial convergent section (104), an axial divergent section (106) and a throat (102) located axially between the axial convergent section (104) and the axial divergent section (106);
the plurality of fuel passages (88) arranged circumferentially around the axis (74), and the plurality of fuel passages (88) comprising a first fuel passage and a second fuel passage;
the first fuel passage extending within the fuel nozzle (72) to a first fuel passage outlet (118) disposed along and fluidly coupled to the axial divergent section (106) axially between the axial convergent section (104) and the center passage outlet (94), and a trajectory (120) of the first fuel passage at the first fuel passage outlet (118) angularly offset from the axis (74) by an offset angle (122) equal to or less than forty-five degrees; and
the second fuel passage extending within the fuel nozzle (72) to a second fuel passage outlet (118) disposed along and fluidly coupled to the axial divergent section (106) axially between the axial convergent section (104) and the center passage outlet (94).

15. An apparatus for an engine, comprising:
a fuel nozzle (72) including a base end (78), a tip end (76), a center passage (84) and a plurality of fuel passages (88), the fuel nozzle (72) extending axially along an axis (74) from the base end (78) to the tip end (76);
the center passage (84) extending axially through the fuel nozzle (72) from a center passage inlet (96) at the base end (78) to a center passage outlet (94) at the tip end (76), and the center passage (84) projecting radially out from the axis (74) to an outer peripheral boundary of the center passage (84);
the plurality of fuel passages (88) arranged circumferentially around the axis (74), and the plurality of fuel passages (88) comprising a first fuel passage and a second fuel passage;
the first fuel passage extending within the fuel nozzle (72) to a first fuel passage outlet (118) disposed along an axial section (106) of the center passage (84) where the outer peripheral boundary (98) has a curved sectional geometry when viewed in a reference plane parallel with the axis (74), and a trajectory (120) of the first fuel passage at the first fuel passage outlet (118) angularly offset from the axis (74) by an offset angle (122) equal to or less than forty-five degrees; and
the second fuel passage extending within the fuel nozzle (72) to a second fuel passage outlet (118) disposed along the axial section (106) of the center passage (84).
